# EUROPÄISCHE PATENTSCHRIFT

(11) **EP 1 786 634 B1**
(45) Veröffentlichungstag und Bekanntmachung des Hinweises auf die Patenterteilung: **14.10.2009**
(21) Anmeldenummer: 05774385.8
(22) Anmeldetag: 12.08.2005
(51) Int. Cl.: B60B 27/00, G01P 3/44, F16C 33/80

(54) **RADLAGERANORDNUNG MIT EINEM RADIALFLANSCHSEITIGEN ENCODER**
WHEEL BEARING ARRANGEMENT COMPRISING A RADIAL-FLANGE-SIDE ENCODER
SYSTEME DE ROULEMENT DE ROUE COMPRENANT UN CODEUR DU COTE D'UN FLASQUE RADIAL

(30) Priorität: 11.09.2004 DE 102004044118
(43) Veröffentlichungstag der Anmeldung: 23.05.2007
(73) Patentinhaber: Schaeffler KG, 91074 Herzogenaurach (DE)
(72) Erfinder: HEIM, Jens, 97493 Bergrheinfeld (DE); NIEBLING, Peter, 97688 Bad Kissingen (DE); RUOFF, Gottfried, 97464 Niederwerrn (DE); DLUGAI, Darius, 97421 Schweinfurt (DE); MOCK, Christian, 97493 Bergrheinfeld (DE)
(86) Internationale Anmeldenummer: PCT/DE2005/001427
(87) Internationale Veröffentlichungsnummer: WO 2006/026950

(56) Entgegenhaltungen:
- EP-A- 1 447 240
- DE-A1- 3 819 619
- US-A- 4 864 231
- PATENT ABSTRACTS OF JAPAN Bd. 2003, Nr. 12, 5. Dezember 2003 (2003-12-05) & JP 2004 045370 A (KOYO SEIKO CO LTD), 12. Februar 2004 (2004-02-12)

## Beschreibung

### Gebiet der Erfindung

Die Erfindung betrifft eine Radlageranordnung mit der eine Nabe um die Rotationsachse der Nabe rotierbar in zumindest einem nicht rotierenden Außenring gelagert ist, wobei die Radlageranordnung einen Encoder aufweist und dabei der Encoder an der Seite der Radlageranordnung nabenseitig fest ist, an der ein Radialflansch radial von der Nabe abgeht, und dabei der Encoder mit der Dichtungsanordnung in einer Wirkverbindung steht.

### Hintergrund der Erfindung

Eine derartige Radlageranordnung ist in US 4,864,231 beschrieben. An dem Radialflansch der Nabe ist das Fahrzeugrad in der Regel mit Bolzen befestigt. Der Radialflansch ist in diesem Fall einteilig mit der Nabe ausgebildet.

Die Radlagerung ist in der Regel ein Wälzlager mit zwei oder mehr Reihen Wälzkörpern. Auf der Nabe sitzen wahlweise Innenringe mit den Laufbahnen für die Reihen. Wahlweise ist wenigstens eine Laufbahn von zwei oder mehr der Reihen Wälzkörper direkt in das Material der Nabe eingebracht. Das Radlager weist einen oder mehr Außenringe auf, an denen die Innenlaufbahnen für die Reihen ausgebildet sind. Die Außenringe sitzen entweder in einem Radträger oder der Außenring ist, wie in dem zugrunde gelegten Stand der Technik, der Radträger selbst. Der Radträger ist mit einem Flansch versehen, der beispielsweise mehrere Befestigungslöcher zur fahrzeugseitigen Befestigung des Radträgers aufweist. Demnach ist der Außenring rotationsfest. Die Nabe und somit das Fahrzeugrad sind in der Radlagerung rotierend gegenüber dem Radträger gelagert.

Die Radlagerung ist in der Regel mit zwei Dichtungen gegen Umwelteinflüsse von außen abgedichtet. Eine der Dichtungen schützt die Radlagerung sowie den Encoder und steht gleichzeitig mit dem Encoder in einer dichtenden Wirkverbindung. Dazu weist die Dichtung ein Dichtelement in Form eines Abdeckbleches auf, das an dem Außenring sitzt. Eine Dichtlippe an dem Abdeckblech liegt dichtend an dem Encoder an.

Die Sensorik ist oft auf der Seite des Radialflansches angeordnet, da der fahrzeugseitige Bauraum zwischen der Gelenkglocke und dem Radträger zum Durchführen der Verbindungsleitungen der Sensorik knapp ist und da die Sensorik an dieser Seite teils extremen Verschmutzungen ausgesetzt ist. Der Aufwand zum Abdichten des Radlagers und zum gleichzeitigen Schutz der Sensorik ist deshalb relativ hoch. Die Verbindungsleitungen sind durch Schlamm- oder Eisanhäufungen seitens der Gelenkglocke gefährdet.

Für die Sensorik steht seitens des Fahrzeugrades dagegen jedoch wenig Bauraum für die Bauteile Dichtung, Encoder und Sensor(en) an sich zur Verfügung. Zusätzlich ragen die aus dem Radialflansch axial hervorstehenden Köpfe/Gewindeenden der Bolzen zur Befestigung des Rades störend in den Bauraum hinein und beeinflussen auch durch Störsignale die Signale der Sensorik.

Der Encoder sitzt mittels eines Presssitzes direkt auf der Nabe und rotiert mit dieser relativ zu einem Sensor. Der zur Sensorik gehörende Sensor ist in der Anordnung nach US 4,864,231 in einem Loch des Radträgers aufgenommen und ragt durch das Loch hindurch in das Innere der Radlagerung hinein. Der Sitz des Sensors in dem Außenring ist gesondert herzustellen und abzudichten und verursacht somit zusätzliche Kosten. Bei der Montage des Sensors, auch bei Reparatur und Wartung, besteht die Gefahr, dass beim Einführen des Sensors in das Loch Schmutzpartikel in das Innere des Wälzlagers gelangen. Die in Radlageranordnungen außen liegenden Dichtlippen bekannter Dichtungsanordnungen sind in der Regel Umwelteinflüssen direkt ausgesetzt und fallen frühzeitig aus. Schmutz und Nässe unterwandem die Dichtung und dringen ins Wälzlager ein.

### Zusammenfassung der Erfindung

Die Aufgabe der Erfindung ist es daher, eine Radlageranordnung zu schaffen, mit der die zuvor beschriebenen Nachteile vermieden werden. Insbesondere eine einfache und kostengünstige Dichtungsanordnung mit integriertem Encoder zu schaffen. Weiter ist radialflanschseitig ausreichend Bauraum für die Dichtungsanordnung und den Encoder zu schaffen

Diese Aufgabe ist nach dem Gegenstand des kennzeichnenden Telles des Anspruches 1 dadurch gelöst, dass:
- Die Radlageranordnung, an der Seite der Radlagerung, die dem Radialflansch zugewandt ist, eine Spaltdichtung aufweist, wobei in der Spaltdichtung zwischen dem Encoder und einem Dichtungselement eine Wirkverbindung besteht. Die Spaltdichtung ist dabei durch wenigstens einen um die Rotationsachse umlaufenden Dichtspalt zwisehen dem Encoder und einem Dichtelement der Dichtungsanordnung gebildet.

Durch eine derartige Radlageranordnung ist zusätzlicher Bauraum für die radseltige Dichtung der Radiagerung und für die Sensorik geschaffen. Der Encoder ist durch die Dichtung ausreichend geschützt. Der Sensor ist räumlich vom Inneren des Radlagers getrennt angeordnet. Die Lageranordnung und insbesondere die Dichtungsanordnung lässt sich kostengünstig herstellen, insbesondere dann, wenn das Abdeckblech und der Sensor mit Träger kalt geformte Blechteile sind. Der Encoder und der Sensor sind weit genug von den Störeinflüssen der Radbolzen auf die Sensorsignale entfernt angeordnet. Die aktive Fläche des Encoders (der mit dem Sensor kommunizierende Kodierabschnitt) kann frei und unabhängig von den Abmessungen des axialen Bauraumes zwischen der Stirnseite des Radlagers und zwischen dem Radialflansch großzügig gestaltet werden. Die Qualität der Signale ist verbessert. Der axiale Bauraum ist kann somit für die Gestaltung der Dichtungsanordnung nach Erfindung mit ausreichender Dichtwirkung genutzt werden.

Die Erfindung ist für die Verwendung von allen denkbaren magnetisierten (wechselnd polarisiert), wie Impulsgebern mit magnetisierten Partikeln in Elastomeren, oder für die Verwendung von nicht magnetisierten Encodem, wie Impulsgeberringen aus Blech geeignet. Die Schutzhülse, wahlweise auch aus Kunststoff, ist vorzugsweise ein Schutzblech aus nicht ferromagnetischen Material. Der Encoder ist gegen Steinschlag oder andere harte Partikel geschützt. Spritzwasser und ferromagnetische Partikel aus der Umwelt werden durch die Schutzhülse zurückgehalten.

Die Abmessung des Spaltes der Spaltdichtung ist kleiner oder maximal gleich einem Millimeter. Die entsprechende Ausrichtung der Schutzhülse und die Lage des Dichtspaltes sichern ab, dass über den Spalt in das innere der Dichtung eingedrungene Flüssigkeit aus dem Spalt abtropfen oder im Betrieb durch Fliehkraft am rotierenden Encoder durch den Spalt nach außen gefördert werden.

Bei einer vorteilhaften Ausführungsform ist die Nabe um die Rotationsachse der Nabe rotierbar und in zumindest einem nicht rotierenden Außenring gelagert, wobei die Radlageranordnung den Encoder aufweist und dabei der Encoder an der Seite der Radlageranordnung nabenseitig fest ist, an der ein Radialflansch radial von der Nabe abgeht und wobei der nabenseitig feste Encoder einen Ringabschnitt des Außenringes radial außen umfangsseltig berührungslos umfasst.

Vorteilhafterweise übergreift der Encoder den Ringabschnitt aus Richtung des Radialflansches axial und somit richtungsgleich zur Rotationsachse.

Vorteilhafterweise ist der Encoder nabenseitig mit einem Träger des Encoders fest, wobei der Träger von der Rotationsachse aus radial ausgerichtet zwischen dem Radialflansch und dem Außenring verläuft.

Vorteilhafterweise sitzt auf der Nabe wenigstens ein Innenring der Radlageranordnung.

Bei einer vorteilhaften Ausführungsform ist der Encoder mit dem Innenring und/oder mit der Oberfläche der Nabe verbunden.

Vorteilhafterweise ist an der Nabe direkt wenigstens eine Laufbahn für zumindest eine Reihe Wälzkörper der Radlageranordnung ausgebildet.

Bei einer vorteilhaften Ausführungsform stehen von dem Radialflansch aus Überstände von Befestigungsbolzen axial in Richtung an der Seite des Radialflansches über, die der Radlagerung zugewandt ist, wobei der mit zumindest einem Sensor kommunizierende Kodierabschnitt des Encoders radial zu den Überständen beabstandet und dabei axial von den Überständen nicht überragt ist.

Bei einer vorteilhaften Ausführungsform ist der radial der Rotationsachse am nächsten liegende Überstand weiter von der Rotationsachse entfernt als der Encoder radial am weitesten von der Rotationsachse absteht.

Vorteilhafterweise ist der Encoder radial außen berührungslos von einer Schutzhülse umgeben.

Vorteilhafterweise ist die Schutzhülse an dem Außenring fest.

### Beschreibung der Zeichnungen

Nachfolgend sind weitere Ausgestaltungen und Ausführungsbeispiele der Erfindung näher beschrieben.

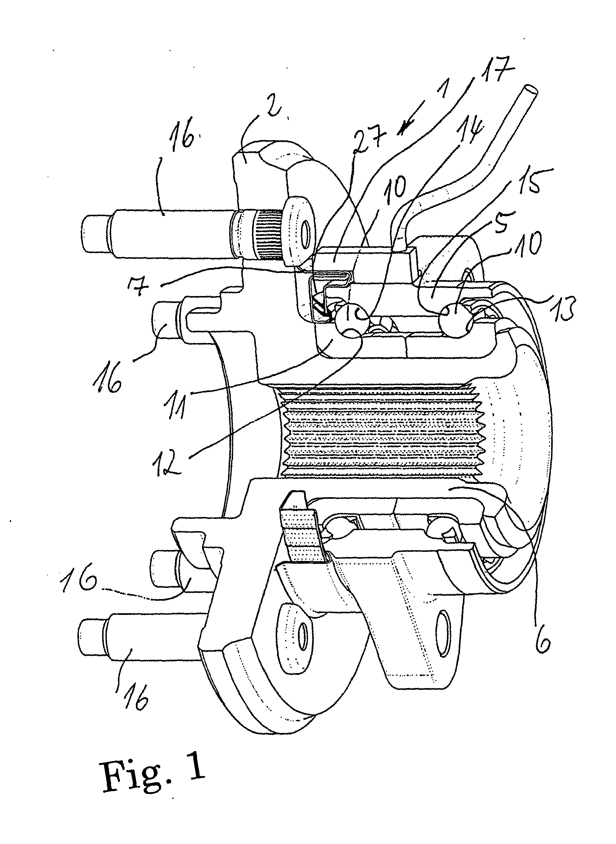

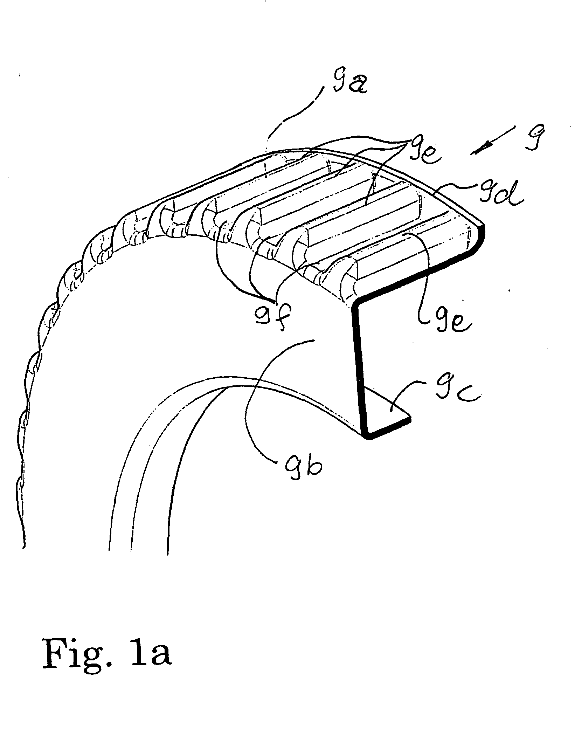

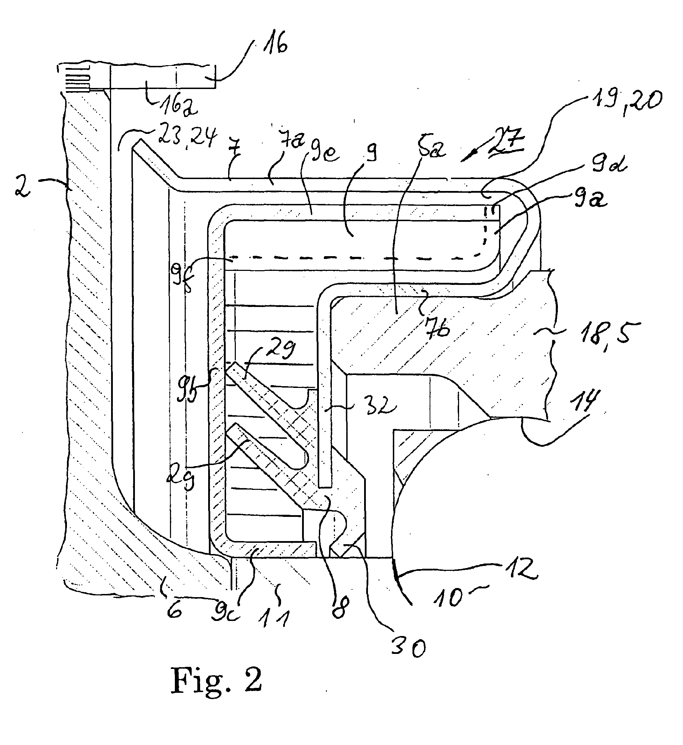

Figur 1 zeigt eine Gesamtansicht eines Ausführungsbeispieles einer Radlageranordnung 1 in einer längs entlang der Rotationsachse 1a geschnittenen Darstellung. Figur 1a ein Segment eines Encoders der radflanschseitigen Dichtungsanordnung aus der Radlageranordnung 1 nach Figur 1. Figur 2 zeigt die radialflanschseitige Dichtungsanordnung 27 der Radlageranordnung 1 teilweise und in einer längs entlang der Rotationsachse 1a geschnittenen Darstellung.

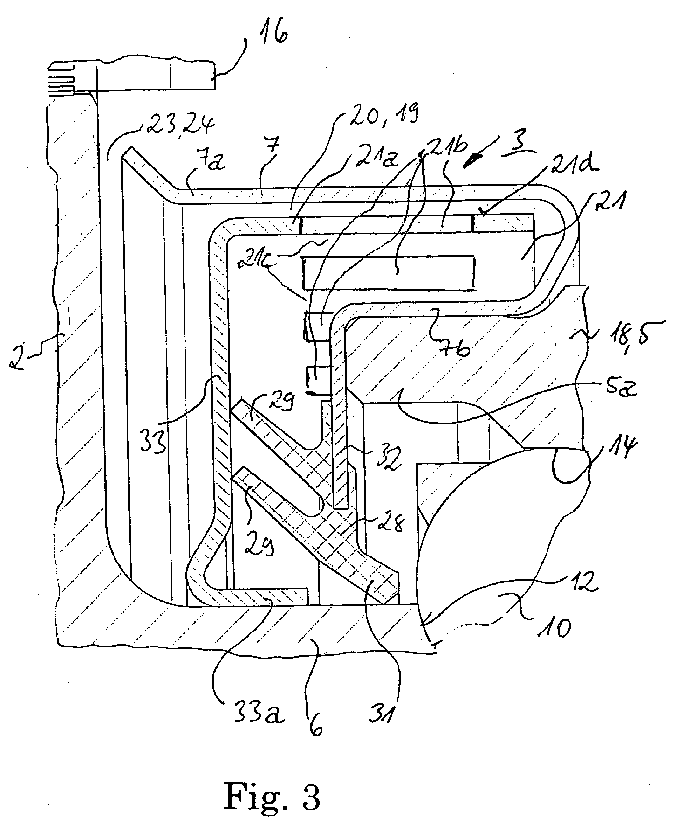

Figuren 3, 4 und 5 zeigen radialflanschseitige Dichtungsanordnung 3 und 4 teilweise und in einer längs entlang der Rotationsachse 1a geschnittenen Darstellung, deren wesentlicher Aufbau dem der Dichtungsanordnung 27 entspricht, die jedoch zur Radiagerung 1 alternative Gestaltungsmerkmale zum Beispiel hinsichtlich der Ausführung des Encoders bzw. des Dichtelementes aufweisen - teilweise längs entlang der Rotationsachse geschnitten dargestellt.

Figur 1 und 2 zeigen eine Radlageranordnung 1 mit einem Radialflansch 2 und einem Radträger 5. Der Radialflansch 2 ist einstückig mit einer Nabe 6 ausgebildet und um die Rotationsachse 1a rotierbar in dem Radträger 5 gelagert. Die Radlagerung ist aus zwei Reihen Wälzkörpern 10, einem Innenring 11, wahlweise zwei Innenringen , zwei Laufbahnen 12 und 13 sowie aus einem zwei Laufbahnen 14 und 15 aufweisenden Außenring 18 in Form des Radträgers 5 gebildet. Die Laufbahn 12 ist an dem Innenring 11 und die andere Laufbahn 13 ist direkt an der Nabe 6 ausgebildet. Die Nabe 6 mit dem Radialflansch 2 ist über die beiden Reihen der Wälzkörper 10 in dem Radträger 5 drehbar gelagert. Ein nicht dargestelltes Fahrzeugrad ist mit den Radbolzen 16 an dem Radialflansch 2 befestigt.

Die Radlageranordnung 1 weist weiter eine Dichtungsanordnung 27 mit einer Schutzhülse 7 aus nicht ferromagnetischen Blech, mit einer elastischen Dichtung 8 sowie mit einem Encoder 9 auf. Dem Encoder 9 liegt wenigstens ein Sensor 17 gegenüber. Der Encoder 9 und der Sensor 17 sind durch die Schutzhülse 7 voneinander getrennt.

Der Encoder 9, ist als Einzelteil in Figur 1a teilweise dargestellt und ist ein kalt aus Blech geformtes Bauteil aus einem Träger 9b mit Kragen 9c und aus dem zur Signalerzeugung mit dem Sensor 17 kommunizierende Kodierabschnitt 9a. Der Kodierabschnitt 9a ist für Wechselsignale in diesem Fall wellenförmig so strukturiert, dass sich in Umfangsrichtung Spitzen 9e mit Talsohlen 9f und mit gleicher Teilung zueinander einander abwechseln.

Denkbar ist auch, dass, wie in Figur 3 dargestellt, die Dichtungsanordnung 3 einen Encoder 21 aufweist, dessen mit dem Sensor 17 kommunizierender Kodierabschnitt 21a ein hohlzylindrischer Abschnitt mit fensterartigen radialen Durchbrüchen 21b ist. Die Durchbrüche 21b sind in Umfangsrichtung durch Stege 21c gleicher Abmessungen voneinander getrennt und mit gleicher Teilung zueinander angeordnet. ,

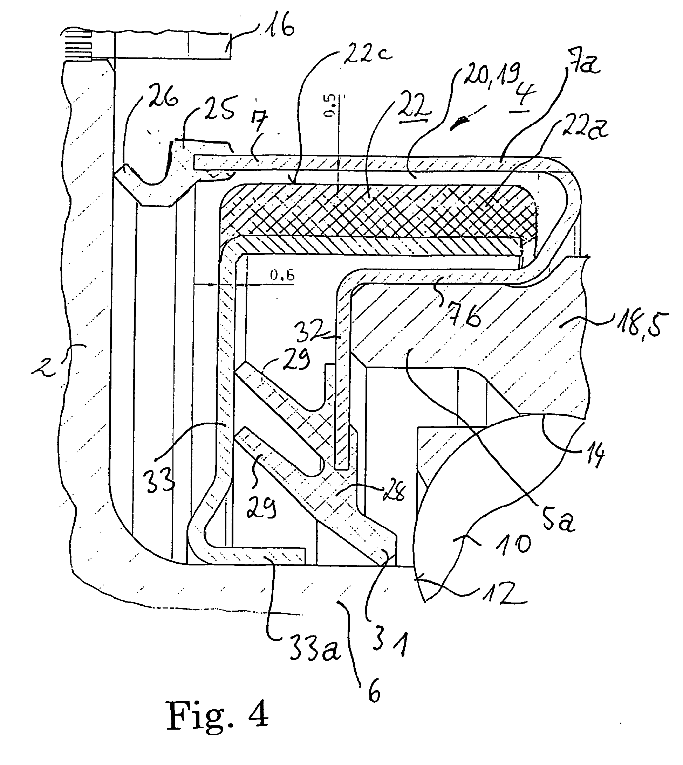

Alternativ zeigt Figur 4 einen Encoder 22, dessen zur Signalerzeugung mit dem Sensor 17 kommunizierender Kodierabschnitt 22a im wesentlichen ein Körper aus Elastomer mit multipolar magnetisierten Zusätzen ist.

Der Encoder 9 ist durch einen Presssitz des Kragens 9c am Träger 9b auf den Innenring 11 und somit nabenseitig fest. Der für die Signalerzeugung des Sensors 17 relevante Kodierabschnitt 9a des Encoders 9a erstreckt sich ab Träger 9b von dem Radialflansch 2 weg axial in Richtung des Radträgers 5 und übergreift diesen an dem Ringabschnitt 5a. Der Encoder 9 umfasst dabei mit dem kommunizierenden Kodierabschnitt 9a den Ringabschnitt 5a des Außenringes 18 bzw. des Trägers 5 berührungslos.

Die Überstände 16a der Radbolzen 16 sind in diesem Fall die Köpfe der Radbolzen 16 und stehen axial von dem Radialflansch 2 ab. Der kommunizierende Kodierabschnitt 9a ist von den Überständen radial entfernt und axial nicht überragt. Die radiale Entfernung der Überstände von der Nabe 6 ist größer als die radiale Entfernung der radial äußersten Körperkante des Kodierabschnittes 9a von der Nabe 6.

Die Schutzhülse 7 ist ein napfförmig aus Blech kalt geformt und nicht ferromagnetisch. Ein radial außen liegender erster hohlzylindrischer Abschnitt 7a der Schutzhülse 7 deckt den Encoder 9 von außen gegen Umwelteinflüsse ab. Ein einteilig mit dem ersten Abschnitt 7a ausgebildeter zweiter hohlzylindrischer Abschnitt 7b sitzt fest auf dem Ringabschnitt 5a des Außenringes 16, so dass die Schutzhülse 7 zusammen mit dem Außenring 16 im Betrieb der Radlagerung rotationsfest ist. Durch den Dichtspalt 19 zwischen dem als Dichtelement funktionierenden ersten Abschnitt 7a und dem umfangseitig umlaufenden Rand 9d am axialen Ende des Encoders 9 (Figur 1a, Figur 2) bzw. zwischen der Außenkontur 21d der unterbrochenen Mantelfläche sowie dem ersten Abschnitt 7a (Figur 3) und zwischen der Außenkontur 22b der zylindrischen Mantelfläche Elastomerkörpers sowie dem ersten Abschnitt 7a (Figur 4) ist eine Spaltdichtung 20 gebildet. Die radiale Abmessung des Dichtspaltes 19 ist vorzugsweise 0,5mm.

Die Dichtungsanordnungen 3, und 27 weisen wahlweise eine weitere Spaltdichtung 24 mit dem Dichtspalt 23 auf, der axial zwischen der Schutzhülse 7 und dem Radialflansch 2 ausgebildet ist. An der Schutzhülse 7 der Dichtungsanordnung 4 nach Figur 4 ist eine elastische Dichtung 25 in diesem Fall mit einer Dichtlippe 26 fest. Die Dichtlippe 26 liegt dichtend am Radialflansch 2 an.

In der Wirkverbindung in der Reihenfolge von außen nach innen folgt die Spaltdichtung 20 der Spaltdichtung 24 bzw. der Dichtung 25 lagerseitig. Der Spaltdichtung 20 folgen danach in dieser Reihenfolge die Dichtung 8 in der Dichtungsanordnung 27 nach Figur 1 und 2 und die Dichtung 28 in den Dichtungsanordnungen 3 und 4. Die Dichtungen 8 und 28 weisen jeweils zwei der Dichtlippen 29 und eine Dichtlippe 30 bzw. 31 auf. Die Dichtungen 8, 28 sind jeweils an einem Scheibenabschnitt 32 fest. Der Scheibenabschnitt 32 ist einteilig mit dem Schutzhülse 7 ausgebildet. Die Dichtlippen 29 sind axial gegen den Träger 9b bzw. 33 des jeweiligen Encoders 9 bzw. 21, 22 vorgespannt. Die Dichtlippe 30 der Dichtungsanordnung 27 ist radial gegen den Innenring 11 vorgespannt und dichtet das Radlager nach außen ab. Die Dichtlippe 31 liegt dichtend radial direkt gegen die Nabe 6 an und dichtet das nach innen ab.

Der Encoder 21, 22 ist durch einen Presssitz des Kragens 33a am Träger 33 direkt auf der Nabe 6 fest. Der für die Signalerzeugung des Sensors 17 relevante Kodierabschnitt 21 a bzw. 22a des Encoders 21, 22 erstreckt sich ab Träger 33 von dem Radialflansch 2 weg axial in Richtung des Radträgers 5 und übergreift diesen an dem Ringabschnitt 5a. Der Encoder 21 bzw. 22 umfasst dabei mit dem kommunizierenden Kodierabschnitt 21 a bzw. 22a den Ringabschnitt 5a des Außenringes 18 bzw. des Trägers 5 berührungslos.

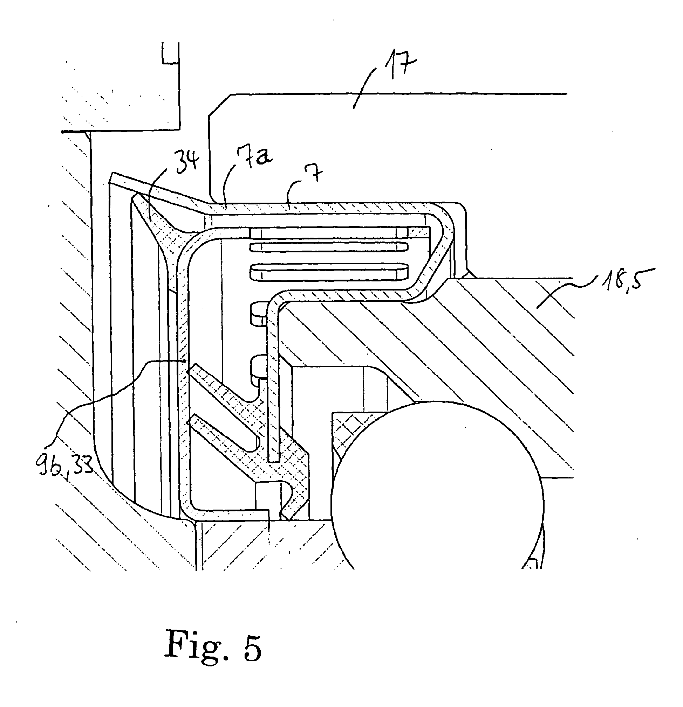

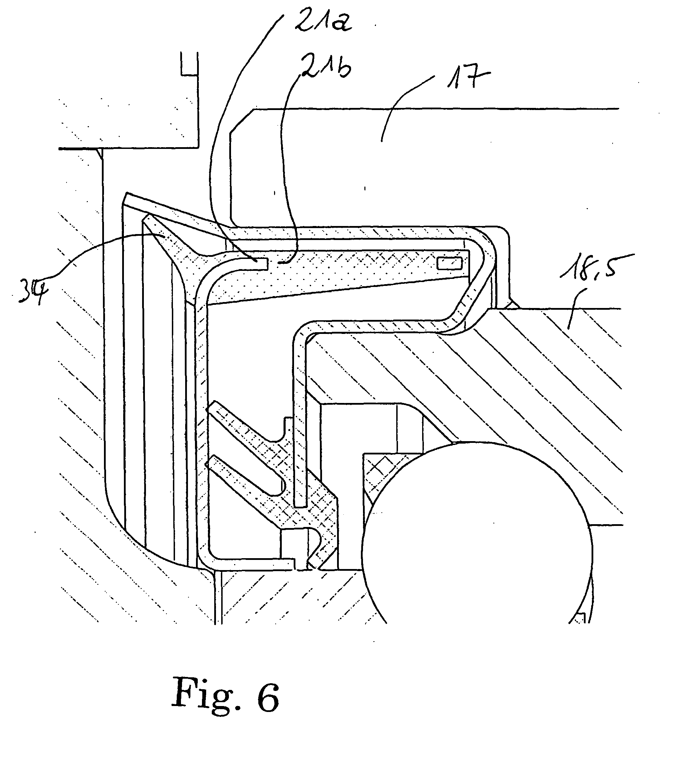

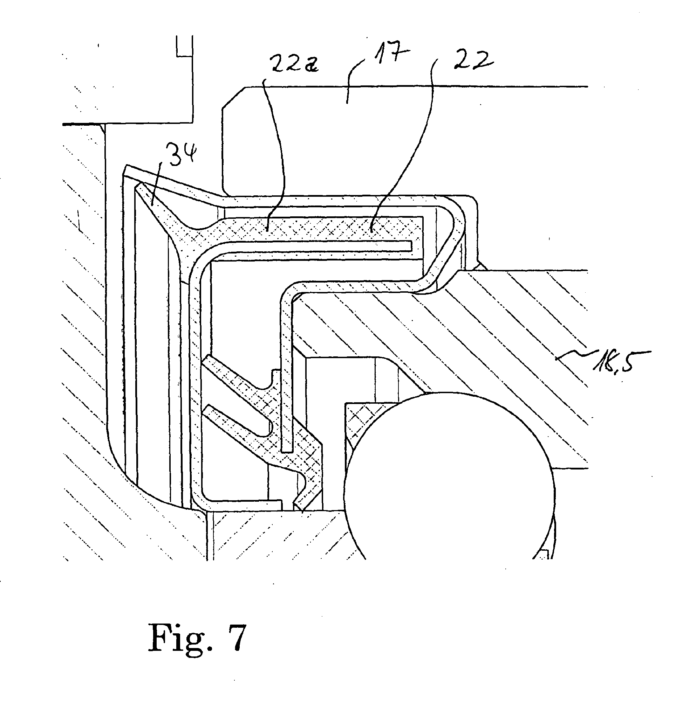

Die Figuren 5 bis 7 zeigen alternative Dichtungsanordnung in der Radlal geranordnung 1 mit einer Vordichtung zur Spaltdichtung 20. Die Vordichtung ist durch wenigstens eine Dichtlippe 34 an Modifikationen der Encoder 9, 21 bzw. 22 gebildet. Die Dichtlippe 34 liegt an der Schutzhülse 7 dichtend an. In der Dichtungsanordnung nach Figur 5 ist die Dichtlippe separat auf den Träger 9b bzw. 33 durch Vulkanisieren oder ähnliches aufgebracht. Die Dichtlippe 34 ist an der Ausgestaltung nach Figur 6 einteilig mit einem Körper 35 ausgebildet, dessen Elastomerwerkstoff auch die Durchbrüche 21b des Kodierabschnittes 21a ausfüllt. In Figur 7 ist ein Encoder 22 aus Elastomer und mit magnetisierten Partikeln versetzt dargestellt, bei dem die Dichtlippe 34 einteilig mit dem Kodierabschnitt 22a aus dem Elastomer gebildet ist.

### Bezugszeichen

- 1: Radiageranordnung
- 1a: Rotationsachse
- 2: Radialflansch
- 3: Dichtungsanordnung
- 4: Dichtungsanordnung
- 5: Radträger
- 5a: Ringabschnitt
- 6: Nabe
- 7: Schutzhülse
- 7a: erster Abschnitt
- 7b: zweiter Abschnitt
- 8: Dichtung
- 9: Encoder
- 9a: Kodierabschnitt
- 9b: Träger
- 9c: Kragen
- 9d: Rand
- 9e: Spitze
- 9f: Talsohle
- 10: Wälzkörper
- 11: Innenring
- 12: Laufbahn
- 13: Laufbahn
- 14: Laufbahn
- 15: Laufbahn
- 16: Radbolzen

- 16a: überstands
- 17: Sensor
- 18: Außenring
- 19: Dichtspalt
- 20: Spaltdichtung
- 21: Encoder
- 21a: Kodierabschnitt
- 21b: Durchbruch
- 21c: Steg
- 21d: Außenkontur
- 22: Encoder
- 22a: Kodierabschnitt
- 22b: Außenkontur
- 23: Dichtspalt
- 24: Spaltdichtung
- 25: Dichtung
- 26: Dichtlippe
- 27: Dichtungsanordnung
- 28: Dichtung
- 29: Dichtlippe
- 30: Dichtlippe
- 31: Dichtlippe
- 32: Scheibenabschnitt
- 33: Träger
- 33a: Kragen
- 34: Dichtlippe
- 35: Körper

## Patentansprüche

1. Radtageranordnung (1) mit der eine Nabe (6) um die Rotationsachse (1a) der Nabe (6) rotierbar in zumindest einem nicht rotierenden Außenring (18) gelagert ist, wobei die Radlageranordnung (1) wenigstens eine Dichtungsanordnung (3, 4, 27) und einen Encoder (9, 21, 22) aufweist und dabei die Dichtungsanordnung (3, 4, 27) an der Seite der Radlageranordnung (1) nabenseitig fest ist, an der ein Radialflansch (2) radial von der Nabe (6) abgeht, und dabei der Encoder (9, 21, 22) mit der Dichtungsanordnung (3, 4, 27) in einer Wirkverbindung steht, **dadurch gekennzeichnet, dass** die Wirkverbindung zumindest eine erste Spaltdichtung (20) zwischen dem Encoder (9, 21, 22) und einem Dichtelement der Dichtungsanordnung (3, 4, 27) ist, wobei die Spaltdichtung (20) wenigstens einen um die Rotationsachse (1a) umlaufenden ersten Dichtspalt (19) aufweist.

2. Radiageranordnung nach Anspruch 1, **dadurch gekennzeichnet, dass** der Dichtspalt (19) kleiner als 1mm ist.

3. Radlageranordnung nach Anspruch 1, **dadurch gekennzeichnet, dass** das Dichtelement an dem Außenring (18) fest ist.

4. Radlageranordnung nach Anspruch 1, **dadurch gekennzeichnet, dass** das Dichtelement eine den Encoder (9, 21, 22) radial außen berührungslos umgebende Schutzhülse (7) ist, wobei der kleinste freie Abstand zwischen der Schutzhülse (7) und dem Encoder (9, 21, 22) zumindest an dem um die Rotationsachse (1a) umlaufenden ersten Dichtspalt (19) ausgebildet ist.

5. Radlageranordnung nach Anspruch 4, **dadurch gekennzeichnet, dass** die Wirkverbindung wenigstens die Spaltdichtung (20) sowie ein Dichtkontakt zwischen der Schutzhülse (7) und wenigstens einer ersten Dichtlippe (29) ist, wobei die Radlageranordnung (1) in der Wirkverbindung zuerst radialflanschseitig zwischen dem Encoder (9, 21, 22) und der Dichtungsanordnung (3, 4, 27) zumindest von dem ersten Dichtspalt (19) nach außen gegen Umwelteinflüsse und dann nachfolgend von der dem Dichtspalt (19) in der Wirkverbindung folgenden ersten Dichtlippe (29) abgedichtet ist.

6. Radlageranordnung nach Anspruch 5, **dadurch gekennzeichnet, dass** die erste Dichtlippe (29) dichtend an einem scheibenförmigen Träger (9b, 33) des Encoders (9, 21, 22) anliegt, wobei der scheibenförmige Träger (9b, 33) nabenseitig fest ist.

7. Radlageranordnung nach Anspruch 4, **dadurch gekennzeichnet, dass** die Schutzhülse (7) aus einem ersten hohlzylindrischen Abschnitt (7a) gebildet ist, der den Encoder (9, 21, 22) radial außen umfangsseitig berührungslos umgibt, und dass der erste hohlzylindrische Abschnitt (7a) einteilig mit einem zweiten hohlzylindrischen Abschnitt (7b) verbunden ist, wobei der zweite Abschnitt radial außen berührungslos zumindest teilweise von dem Encoder (9, 21, 22) umgeben ist.

8. Radlageranordnung nach Anspruch 7, **dadurch gekennzeichnet, dass** von dem zweiten Abschnitt ein Scheibenabschnitt (32) in Richtung der Rotationsachse (1a) abgewinkelt ist und dass an dem Schelbenabschnitt (32) eine elastische Dichtung (8, 28) mit wenigstens einer ersten elastischen Dichtlippe (29) fest ist, wobei die erste Dichtlippe (29) dichtend an einem schelbenförmigen Träger (33) des Encoders (9, 21, 22) anliegt und wobei der scheibenförmige Träger (33) nabenseitig fest ist.

9. Radlageranordnung nach Anspruch 11, **dadurch gekennzeichnet, dass** die Dichtung (8, 28) wenigstens zwei der ersten Dichtlippen (29) aufweist.

10. Radlagerung nach Anspruch 11, **dadurch gekennzeichnet, dass** die Dichtung (8, 28) eine zweite Dichtlippe (30, 31) aufweist, wobei die zweite Dichtlippe (30, 31) dichtend in Richtung der Rotationsachse (1a) vorgespannt ist.

11. Radlageranordnung nach Anspruch 13, **dadurch gekennzeichnet, dass** die zweite Dichtlippe (30) radial an einem Innenring (11) der Radlagerung dichtend anliegt.

12. Radlageranordnung nach Anspruch 13, **dadurch gekennzeichnet, dass** die zweite Dichtlippe (31) radial an einer Oberfläche der Nabe (6) dichtend anliegt.

13. Radlageranordnung nach Anspruch 4, **gekennzeichnet durch** eine dichtende Wirkverbindung zwischen der Schutzhülse (7) und dem Radialflansch (2).

14. Radlageranordnung nach Anspruch 5, **dadurch gekennzeichnet, dass** die dichtende Wirkverbindung durch eine zweite Spaltdichtung (24) mit wenigstens einem zweiten Dichtspalt (23) zwischen der Schutzhülse (7) und dem Radialflansch (2) gebildet ist.

15. Radlageranordnung nach Anspruch 5, **dadurch gekennzeichnet, dass** an der Schutzhülse (7) wenigstens eine elastische dritte Dichtlippe (26) fest ist, wobei die dritte Dichtlippe (26) dichtend an dem Radialflansch (2) anliegt.

16. Radlagerung nach Anspruch 1 oder 4, **dadurch gekennzeichnet, dass** der nabenseitig feste Encoder (9, 21, 22) einen Ringabschnitt des Außenringes (18) radial außen umfangsseitig berührungslos umfasst.

## Claims

1. Wheel bearing arrangement (1), with which a hub (6) is mounted such that it can rotate about the rotational axis (1a) of the hub (6) in at least one nonrotating outer ring (18), the wheel bearing arrangement (1) having at least one sealing arrangement (3, 4, 27) and one encoder (9, 21, 22) and the sealing arrangement (3, 4, 27) being fixed on the hub side on that side of the wheel bearing arrangement (1), on which a radial flange (2) leads away radially from the hub (6), and the encoder (9, 21, 22) being operatively connected here to the sealing arrangement (3, 4, 27), **characterized in that** the operative connection is at least one gap seal (20) between the encoder (9, 21, 22) and a sealing element of the sealing arrangement (3, 4, 27), the gap seal (20) having at least one first sealing gap (19) which extends around the rotational axis (1a).

2. Wheel bearing arrangement according to Claim 1, **characterized in that** the sealing gap (19) is smaller than 1 mm.

3. Wheel bearing arrangement according to Claim 1, **characterized in that** the sealing element is fixed on the outer ring (18).

4. Wheel bearing arrangement according to Claim 1, **characterized in that** the sealing element is a protective sleeve (7) which surrounds the encoder (9, 21, 22) radially on the outside without contact, the smallest free distance between the protective sleeve (7) and the encoder (9, 21, 22) being formed at least on the first sealing gap (19) which extends around the rotational axis (1a).

5. Wheel bearing arrangement according to Claim 4, **characterized in that** the operative connection is at least the gap seal (20) and a sealing contact between the protective sleeve (7) and at least one first sealing lip (29), the wheel bearing arrangement (1) being sealed in the operative connection first of all on the radial flange side between the encoder (9, 21, 22) and the sealing arrangement (3, 4, 27) at least by the first sealing gap (19) to the outside against environmental influences, and then subsequently by the first sealing lip (29) which follows the sealing gap (19) in the operative connection.

6. Wheel bearing arrangement according to Claim 5, **characterized in that** the first sealing lip (29) bears sealingly against a disk-shaped support (9b, 33) of the encoder (9, 21, 22), the disk-shaped support (9b, 33) being fixed on the hub side.

7. Wheel bearing arrangement according to Claim 4, **characterized in that** the protective sleeve (7) is formed from a first hollow-cylindrical section (7a) which surrounds the encoder (9, 21, 22) in a circumferential and radial manner on the outside without contact, and **in that** the first hollow-cylindrical section (7a) is connected integrally to the second hollow-cylindrical section (7b), the second section being surrounded radially on the outside without contact at least partially by the encoder (9, 21, 22).

8. Wheel bearing arrangement according to Claim 7, **characterized in that** a disk section (32) is angled away from the second section in the direction of the rotational axis (1a), and **in that** an elastic seal (8, 28) having at least one first elastic sealing lip (29) is fixed on the disk section (32), the first sealing lip (29) bearing sealingly against the disk-shaped support (33) of the encoder (9, 21, 22), and the disk-shaped support (33) being fixed on the hub side.

9. Wheel bearing arrangement according to Claim 8, **characterized in that** the seal (8, 28) has at least two of the first sealing lips (29).

10. Wheel bearing according to Claim 9, **characterized in that** the seal (8, 28) has a second sealing lip (30, 31), the second sealing lip (30, 31) being prestressed sealingly in the direction of the rotational axis (1a).

11. Wheel bearing arrangement according to Claim 10, **characterized in that** the second sealing lip (30) bears sealingly in a radial manner against an inner ring (11) of the wheel bearing.

12. Wheel bearing arrangement according to Claim 11, **characterized in that** the second sealing lip (31) bears sealingly in a radial manner against the surface of the hub (6).

13. Wheel bearing arrangement according to Claim 4, **characterized by** a sealing operative connection between the protective sleeve (7) and the radial flange (2).

14. Wheel bearing arrangement according to Claim 5, **characterized in that** the sealing operative connection is formed by a second gap seal (24) having at least one second sealing gap (23) between the protective sleeve (7) and the radial flange (2).

15. Wheel bearing arrangement according to Claim 5, **characterized in that** at least one elastic third sealing lip (26) is fixed on the protective sleeve (7), the third sealing lip (26) bearing sealingly against the radial flange (2).

16. Wheel bearing according to Claim 1 or 4,
**characterized in that** the encoder (9, 21, 22) which is fixed on the hub side surrounds an annular section of the outer ring (18) in a circumferential manner radially on the outside without contact.

## Revendications

1. Système de palier de roue (1) avec lequel un moyeu (6) est monté de manière à pouvoir tourner autour de l'axe de rotation (1a) du moyeu (6) dans au moins une bague extérieure (18) non rotative, le système de palier de roue (1) présentant au moins un système d'étanchéité (3, 4, 27) et un codeur (9, 21, 22) et le système d'étanchéité (3, 4, 27) étant fixé du côté du moyeu sur le côté du système de palier de roue (1) duquel part un flasque radial (2) radialement depuis le moyeu (6), et le codeur (9, 21, 22) étant en liaison fonctionnelle avec le système d'étanchéité (3, 4, 27),
**caractérisé en ce que** la liaison fonctionnelle est au moins un premier joint d'interstice (20) entre le codeur (9, 21, 22) et un élément d'étanchéité du système d'étanchéité (3, 4, 27), le joint d'interstice (20) présentant au moins un premier interstice d'étanchéité (19) entourant l'axe de rotation (1a).

2. Système de palier de roue selon la revendication 1, **caractérisé en ce que** l'interstice d'étanchéité (19) est inférieur à 1 mm.

3. Système de palier de roue selon la revendication 1, **caractérisé en ce que** l'élément d'étanchéité est fixé sur la bague extérieure (18).

4. Système de palier de roue selon la revendication 1, **caractérisé en ce que** l'élément d'étanchéité est une douille de protection (7) entourant le codeur (9, 21, 22) sans contact et radialement à l'extérieur, la plus petite distance entre la douille de protection (7) et le codeur (9, 21, 22) étant située au moins au niveau du premier interstice d'étanchéité (19) entourant l'axe de rotation (1a).

5. Système de palier de roue selon la revendication 4, **caractérisé en ce que** la liaison fonctionnelle est constituée par au moins le joint d'interstice (20) ainsi que par un contact d'étanchéité entre la douille de protection (7) et au moins une première lèvre d'étanchéité (29), le système de palier de roue (1) étant rendu étanche dans la liaison fonctionnelle d'abord du côté du flasque radial entre le codeur (9, 21, 22) et le système d'étanchéité (3, 4, 27) au moins par le premier interstice (19) vers l'extérieur vis-à-vis des influences de l'environnement et ensuite par la première lèvre d'étanchéité (29) suivant l'interstice d'étanchéité (19) dans la liaison fonctionnelle.

6. Système de palier de roue selon la revendication 5, **caractérisé en ce que** la première lèvre d'étanchéité (29) s'applique de manière hermétique contre un support en forme de disque (9b, 33) du codeur (9, 21, 22), le support en forme de disque (9b, 33) étant fixé du côté du moyeu.

7. Système de palier de roue selon la revendication 4, **caractérisé en ce que** la douille de protection (7) est formée d'une première portion cylindrique creuse (7a) qui entoure le codeur (9, 21, 22) sans contact et radialement à l'extérieur du côté de la périphérie et **en ce que** la première portion cylindrique creuse (7a) est connectée d'une seule pièce à une deuxième portion cylindrique creuse (7b), la deuxième portion étant entourée au moins partiellement par le codeur (9, 21, 22) sans contact et radialement à l'extérieur.

8. Système de palier de roue selon la revendication 7, **caractérisé en ce que** depuis la deuxième portion, une portion de disque (32) est coudée dans la direction de l'axe de rotation (1a) et **en ce qu'**un joint d'étanchéité élastique (8, 28) est fixé sur la portion de disque (32) avec au moins une première lèvre d'étanchéité élastique (29), la première lèvre d'étanchéité (29) s'appliquant de manière hermétique contre un support en forme de disque (33) du codeur (9, 21, 22) et le support en forme de disque (33) étant fixé du côté du moyeu.

9. Système de palier de roue selon la revendication 11, **caractérisé en ce que** le joint d'étanchéité (8, 28) présente au moins deux des premières lèvres d'étanchéité (29).

10. Système de palier de roue selon la revendication 11, **caractérisé en ce que** le joint d'étanchéité (8, 28) présente une deuxième lèvre d'étanchéité (30, 31), la deuxième lèvre d'étanchéité (30, 31) étant précontrainte axialement dans la direction de l'axe de rotation (1a).

11. Système de palier de roue selon la revendication 13, **caractérisé en ce que** la deuxième lèvre d'étanchéité (30) s'applique hermétiquement radialement contre une bague interne (11) du palier de roue.

12. Système de palier de roue selon la revendication 13, **caractérisé en ce que** la deuxième lèvre d'étanchéité (31) s'applique hermétiquement radialement contre une surface du moyeu (6).

13. Système de palier de roue selon la revendication 4, **caractérisé par** une liaison fonctionnelle hermétique entre la douille de protection (7) et le flasque radial (2).

14. Système de palier de roue selon la revendication 5, **caractérisé en ce que** la liaison fonctionnelle hermétique est formée par un deuxième joint d'interstice (24) avec au moins un deuxième interstice d'étanchéité (23) entre la douille de protection (7) et le flasque radial (2).

15. Système de palier de roue selon la revendication 5, **caractérisé en ce que** sur la douille de protection (7) est fixée au moins une troisième lèvre d'étanchéité élastique (26), la troisième lèvre d'étanchéité élastique (26) s'appliquant hermétiquement contre le flasque radial (2).

16. Système de palier de roue selon la revendication 1 ou 4, **caractérisé en ce que** le codeur (9, 21, 22) fixé du côté du moyeu entoure une portion annulaire de la bague extérieure (18) sans contact et radialement à l'extérieur du côté de la périphérie.
